# FASCICULE DE BREVET EUROPEEN

(11) **EP 2 584 846 B1**
(45) Date de publication et mention de la délivrance du brevet: **25.05.2016**
(21) Numéro de dépôt: 11360047.2
(22) Date de dépôt: 19.10.2011
(51) Int. Cl.: H04W 52/24, H04W 52/38, H04L 1/16

(54) **Procédé d'optimisation énergétique du fonctionnement d'une pluralité d'équipements fonctionnant en groupe dans un réseau de type domotique**
Verfahren zur energetischen Optimierung des Betriebes einer Vielzahl von Geräten, die als Gruppe in einem Netz vom Typ Privathaushalt funktionieren
Method for optimising the operating energy of a plurality of devices operating as a group within a home-automation network.

(43) Date de publication de la demande: 24.04.2013
(73) Titulaire: Hager Controls SAS, 67700 Saverne (FR)
(72) Inventeur: Kieffer, Daniel, 67580 Laubach (FR); Magneron, Philippe, 67370 Truchtersheim (FR)
(74) Mandataire: Nuss, Laurent

(56) Documents cités:
- EP-A2- 2 144 465
- EP-A2- 2 224 776
- WO-A1-2005/022775
- US-A1- 2006 251 102

## Description

La présente invention concerne un procédé d'optimisation énergétique du fonctionnement d'une pluralité d'équipements constituant au moins un groupe interactif dans un réseau de type domotique dans lequel les équipements échangent des données sous forme de signaux radiofréquences, chacun pouvant être émetteur ou récepteur de tels signaux.

L'objectif de l'invention est à titre principal l'optimisation énergétique du fonctionnement de tels équipements, implantés en réseau par exemple dans des bâtiments, aussi bien dans des maisons particulières que dans des immeubles à vocation tertiaire. L'enjeu est d'améliorer la qualité des échanges de données sur le réseau en maîtrisant parallèlement les processus énergétiques qui accompagnent de tels échanges. Secondairement, une telle démarche met globalement en oeuvre des fonctions de supervision et de diagnostic sur un réseau, incluant des mesures de la qualité de service et d'évaluation générale de la disponibilité des services radiotransmis.

A ces effets, le procédé de l'invention est basé sur la gestion de données mesurant les niveaux d'énergie des signaux radiofréquences réceptionnés par les équipements du groupe, lesdites données étant émises par chacun desdits équipements à chaque réception de messages envoyés sur le réseau, et analysées par scannage permanent des signaux échangés sur le réseau, le niveau d'énergie des signaux étant ensuite ajusté pour chaque équipement en vue de correspondre à un niveau d'énergie optimal prédéterminé de réception de signaux par les équipements. Une telle méthode de contrôle énergétique dans un réseau local sans fil est connu du document WO2005/022775.

Actuellement, dans le domaine de la domotique, la collecte d'information se rapportant aux niveaux des signaux radiofréquences reçus dans les équipements fonctionnant en récepteurs s'effectue par l'envoi d'une commande spécifique d'interrogation à destination desdits récepteurs, lesquels renvoient ensuite une trame radio contenant l'information requise.

C'est en général un outil de diagnostic présent sur le réseau qui envoie la requête, en réponse à des situations prédéterminées ou selon des timings prévus à l'avance, et/ou encore lors de la phase de configuration d'un réseau domotique.

Cependant, l'échange de données nécessaire à la collecte des niveaux de signaux n'est pas rapide, implique une consommation d'énergie loin d'être négligeable et encombre au surplus le réseau. En pratique, cet échange requiert en effet l'envoi d'une requête initiale, laquelle provoque en retour l'envoi de n trames radio complètes (une par récepteur) contenant chacune une information de niveau radio, plus connue sous le nom de RSSI (Radio Signal Strenght Indicator), spécifique à un équipement fonctionnant en récepteur. La consommation globale d'énergie est donc de la somme des consommations de la requête et des n trames individuelles en provenance des récepteurs. Ces derniers doivent par ailleurs utiliser un mécanisme d'accès au média tel que le LBT (Listen Before Talk), afin d'éviter au maximum les collisions et la perte d'informations.

Ce type d'échange ne permet pas une exploitation rapide des données de RSSI du fait de la nécessité d'analyser des trames complètes. Il surcharge par ailleurs le réseau puisque, en phase de réponse à la requête, tous les récepteurs vont vouloir répondre quasiment en même temps, diminuant l'efficacité du système radio en réduisant de manière conséquente la disponibilité du média.

Bref, en l'état, l'utilisation des données relatives aux niveaux radio des signaux reçus par les équipement d'un réseau en vue d'optimiser les aspects énergétiques du fonctionnement d'un tel réseau n'est pas une option, tant la consommation d'énergie supplémentaire pour avoir l'information RSSI n'est aujourd'hui pas compensée par le gain éventuel que l'on peut en attendre, gain qui résulte en principe de l'ajustement de la puissance émise à un niveau juste suffisant pour garantir une bonne liaison émetteur-récepteur.

L'invention, en proposant une solution résolvant ce problème de balance énergétique jusqu'ici défavorable, permet de réaliser l'optimisation énergétique du fonctionnement d'une pluralité d'équipements agencés en réseau et communiquant par radio. L'un des intérêts majeurs de la solution réside par conséquent dans le fait qu'elle ne nécessite aucun envoi de requête spécifique pour obtenir l'information, et que les données de niveaux radio sont d'office renvoyés, à des moments très naturellement distribués dans le temps puisque correspondant à chaque échange. La dépense énergétique s'en trouve évidemment réduite. Cette solution contribue aussi fortement à éviter toute saturation du réseau qui pourrait intervenir en cas d'utilisation de la méthode classique de demande puis de réponse en cascade dans le cas d'un grand réseau.

Plus précisément, l'invention se caractérise à titre principal en ce que :
- les données de niveau radiofréquence sont systématiquement intégrées à tous les messages d'accusé de réception des informations émanant de tous les équipements du réseau à la suite de la réception d'un signal ;
- un outil de diagnostic présent sur le réseau scanne en permanence tous les signaux échangés sur le réseau et évalue les données de niveau radiofréquence concernant chaque équipement du réseau et contenues dans tous les messages d'accusé de réception ;
- l'outil de diagnostic les compare à des données correspondant à une valeur seuil d'énergie prédéterminée et envoie ensuite si nécessaire une information de modification de force de signal à l'adresse de chaque équipement émetteur correspondant à un récepteur ayant envoyé un message de niveau radiofréquence différent et/ou écarté d'un intervalle prédéterminé de ladite valeur seuil.

L'information sur les niveaux d'énergie est donc systématiquement intégrée au message d'accusé de réception qui existe toujours à la suite d'un transfert d'information. Dans un groupe d'équipements, l'outil de diagnostic se contente d'écouter l'ensemble des communications radio, qu'il soit ou non destinataire du message, et utilise l'information de niveau radio contenue dans le message d'accusé de réception. Pour le dire autrement, l'intégration des informations de niveau radio se fait dans des messages dont l'outil de diagnostique n'est en général pas destinataire, mais qu'il capte et va utiliser pour éviter toute transmission additionnelle, ce qui a pour effet de réduire la consommation et l'encombrement du réseau. La fonction initiale du message d'accusé de réception est cependant évidemment préservée, et le système n'est en rien perturbé par l'ajout d'informations additionnelles sur les niveaux radio.

De préférence, selon l'invention, les données de niveau de signal radiofréquence intégrées aux messages d'accusé de réception sont véhiculées par les couches supérieures applicatives du protocole de transmission de données utilisé dans le réseau, dans des signaux de la couche transport dudit protocole

Les messages véhiculés dans cette couche sont proportionnellement très courts comparés à une commande classique véhiculée au niveau des couches logicielles applicatives, et il est donc possible d'obtenir l'information des niveaux radio des équipements du groupe en quelques millisecondes.

Ces messages d'accusé de réception sont toujours générés pour confirmer la bonne transmission de messages envoyés sur le réseau, et sont du type appelé classiquement fast ACK. Les messages de type fast ACK sont utilisés par le dispositif émetteur de la commande pour s'assurer de la bonne transmission de l'ordre vers les équipements. Un tel message est géré par la couche physique de transport du protocole. Sa fenêtre de temps de réponse peut avoir été attribuée lors de la phase de configuration, et elle offre donc une grande adaptabilité aux besoins spécifiques du réseau.

L'utilisation de ces informations permet par ailleurs d'avoir une supervision de l'ensemble de l'état du réseau. Cette supervision aboutit notamment à la possibilité de déduire la disponibilité du réseau ainsi que le niveau de risque de perte de transmissions pour chaque équipement, si par exemple un niveau reçu par un équipement spécifique est perçu par l'outil de diagnostic comme faible.

Selon une possibilité, lesdites données de niveau radio peuvent être disposées entre un segment d'identification et un segment de contrôle d'un signal d'accusé de réception standard.

Lesdites données peuvent alternativement être mises à disposition de la couche applicative sous forme d'une variable ou d'une adresse mémoire utilisées par la couche de transport et respectivement accessible ou lisible par ladite couche applicative.

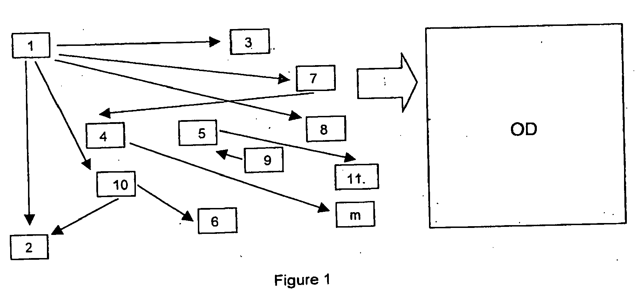

L'invention va à présent être décrite plus en détail, en référence à la figure 1 annexée qui représente très schématiquement un bloc fonctionnel illustrant l'invention.

En référence à cette figure 1 Les équipements (1, 2,..10, 11, ..., m) représentent un système domotique en place. Les flèches symbolisent les communications radio qui ont lieu entre les différents équipements. A chaque émission succède un message d'accusé de réception de type fast Ack. Au final, à l'issue d'un temps très court (quelques millisecondes), l'outil de diagnostic (OD) dispose des informations de puissance reçue par chaque équipement (1, 2,..10, 11, ..., m) d'un groupe et, sur une durée un peu plus longue, de l'ensemble des équipements d'un système à plusieurs groupes. L'outil de diagnostic (OD) peut être amené à envoyer des informations vers les équipements (1, 2,..10, 11, ..., m) afin de leur signaler un niveau radiofréquence reçu trop élevé, permettant ainsi de baisser le niveau de puissance à l'émission, qui permet corollairement une réduction de l'énergie globale consommée par le système.

Parmi les fonctions de diagnostic réalisées par l'outil de diagnostic (OD), l'avertissement d'un niveau radiofréquence trop faible à l'arrivée sur un équipement fonctionnant en récepteur peut être rapporté à l'utilisateur, via un affichage éventuellement disponible sur l'outil de diagnostic (OD), l'utilisateur pouvant améliorer le système en ajoutant par exemple un répéteur.

L'invention permet de résoudre le problème de balance énergétique en procurant un gain d'énergie réel pour l'utilisateur. La possibilité de supervision, les mesures de la qualité de service et de la disponibilité du réseau deviennent quasiment gratuite en terme d'énergie consommée puisque cette dernière se limite à la consommation de l'outil de diagnostic. Il n'y a pas non plus de surcharge du réseau radio car les messages d'accusé de réception de type fast Ack sont courts et envoyés à l'émetteur selon une fenêtre de temps (time slot) prédéfinie, par exemple lors de la création du lien entre l'émetteur et le récepteur. En ajoutant la fonction supplémentaire d'adaptation du niveau radio par les émetteurs en fonction de ce qu'à reçu l'outil de supervision, l'économie d'énergie est maximale pour l'utilisateur.

## Revendications

1. Procédé d'optimisation énergétique du fonctionnement d'une pluralité d'équipements (1, 2,..10, 11, ..., m) constituant au moins un groupe interactif dans un réseau dans lequel les équipements (1, 2,..10, 11, ..., m) échangent des données sous forme de signaux radiofréquences, chacun pouvant être émetteur ou récepteur de tels signaux, ce procédé d'optimisation énergétique étant basé sur la gestion de données mesurant les niveaux d'énergie des signaux radiofréquences réceptionnés par les équipements (1, 2,..10, 11, ..., m) du groupe, lesdites données étant émises par chacun desdits équipements (1, 2,..10, 11, ..., m) à chaque réception de messages envoyés sur le réseau et analysées par scannage permanent des signaux échangés sur le réseau, le niveau d'énergie des signaux étant ajusté pour chaque équipement pour correspondre à un niveau d'énergie optimal prédéterminé de réception de signaux par les équipements (1, 2,..10, 11, ..., m), **caractérisé en ce que** :
- les données de niveau radiofréquence sont systématiquement intégrées à tous les messages d'accusé de réception des informations émanant de tous les équipements (1, 2,..10, 11, ..., m) du réseau à la suite de la réception d'un signal ;
- un outil de diagnostic (OD) présent sur le réseau scanne en permanence tous les signaux échangés sur le réseau et évalue les données de niveau radiofréquence concernant chaque équipement (1, 2,..10, 11, ..., m) du réseau et contenues dans tous les messages d'accusé de réception ;
- l'outil de diagnostic (OD) les compare à des données correspondant à une valeur seuil d'énergie prédéterminée et envoie ensuite si nécessaire une information de modification de force de signal à l'adresse de chaque équipement émetteur correspondant à un récepteur ayant envoyé un message de niveau radiofréquence différent et/ou écarté d'un intervalle prédéterminé de ladite valeur seuil.
- le réseau est de type domotique

2. Procédé d'optimisation énergétique du fonctionnement d'une pluralité d'équipements selon la revendication précédente, **caractérisé en ce que** les données de niveau de signal radiofréquence intégrées aux messages d'accusé de réception sont véhiculées par les couches supérieures applicatives du protocole de transmission de données utilisé dans le réseau, dans des signaux de la couche transport dudit protocole.

3. Procédé d'optimisation énergétique du fonctionnement d'une pluralité d'équipements selon la revendication précédente, **caractérisé en ce que** lesdits messages d'accusé de réception générés pour confirmer la bonne transmissions de messages envoyés sur le réseau sont de type fast ACK.

4. Procédé d'optimisation énergétique du fonctionnement d'une pluralité d'équipements selon la revendication précédente, **caractérisé en ce que** lesdites données sont disposées entre un segment d'identification et un segment de contrôle d'un message d'accusé de réception standard.

5. Procédé d'optimisation énergétique du fonctionnement d'une pluralité d'équipements selon l'une des revendications 2 à 4, **caractérisé en ce que** lesdites données sont mise à disposition de la couche applicative sous forme d'une variable ou d'une adresse mémoire utilisées par la couche de transport et respectivement accessible ou lisible par ladite couche applicative.

## Patentansprüche

1. Verfahren zur energetischen Optimierung des Betriebs mehrerer Geräte (1, 2,..10, 11, ..., m), die mindestens eine interaktive Gruppe in einem Netz bilden, wobei die Geräte (1, 2,.. 10, 11, ..., m) Daten in Form von Funksignalen austauschen, wobei jedes Gerät (1, 2,.. 10, 11, ..., m) Sender oder Empfänger von solchen Signalen sein kann, wobei dieses Verfahren zur energetischen Optimierung auf der Verwaltung von Daten basiert, die die Energiepegel der Funksignale, die von den Geräten (1, 2,.. 10, 11, ..., m) der Gruppe empfangen werden, messen, wobei die Daten durch jedes der Geräte (1, 2,.. 10, 11, ..., m) bei jedem Empfang von Nachrichten, die über das Netz verschickt werden, gesendet werden, und durch ständiges Abtasten der Signale, die über das Netz ausgetauscht werden, ausgewertet werden, wobei der Energiepegel der Signale für jedes Gerät angepasst wird, um einem vorbestimmten optimalen Energiepegel zum Empfangen von Signalen durch die Geräte (1, 2,.. 10, 11, ..., m) zu entsprechen, **dadurch gekennzeichnet, dass**:
- die Daten des Radiofrequenzpegels systematisch in alle Empfangsbestätigungsnachrichten der Informationen, die von allen Geräten (1, 2,.. 10, 11, ..., m) des Netzes kommen, nach dem Empfangen eines Signals integriert werden;
- ein Diagnose-Werkzeug (OD), das in dem Netz vorhanden ist, ständig alle Signale abtastet, die über das Netz ausgetauscht werden, und die Daten des Radiofrequenzpegels, die jedes Gerät (1, 2,..10, 11, ..., m) des Netzes betreffen und in allen Empfangsbestätigungsnachrichten enthalten sind, auswertet;
- das Diagnose-Werkzeug (OD) sie mit Daten vergleicht, die einem vorbestimmten Energieschwellenwert entsprechen, und dann, wenn nötig, eine Information zur Änderung der Signalstärke an jedes Sendegerät sendet, das eine Nachricht über den Radiofrequenzpegel gesendet hat und einem Empfänger entspricht, wobei sich der Radiofrequenzpegel von einem vorbestimmten Intervall des Schwellenwertes unterscheidet und/oder davon entfernt ist.
- das Netz vom Typ Hausautomatisierung ist.

2. Verfahren zur energetischen Optimierung des Betriebs mehrerer Geräte nach dem vorhergehenden Anspruch, **dadurch gekennzeichnet, dass** die Daten des Pegels des Funksignals, die in den Empfangsbestätigungsnachrichten integriert werden, durch die oberen Anwendungsebenen des Datenübertragungsprotokolls, das in dem Netz verwendet wird, in Signalen der Transportebene des Protokolls übermittelt werden.

3. Verfahren zur energetischen Optimierung des Betriebs mehrerer Geräte nach dem vorhergehenden Anspruch, **dadurch gekennzeichnet, dass** die Empfangsquittierungsnachrichten, die generiert werden, um die korrekte Übermittlung von Nachrichten zu bestätigen, die über das Netz gesendet werden, vom Typ "fast" ACK sind.

4. Verfahren zur energetischen Optimierung des Betriebs mehrerer Geräte nach einem der vorhergehenden Ansprüche, **dadurch gekennzeichnet, dass** die Daten zwischen einem Identifizierungssegment und einem Kontrollsegment einer Standard-Empfangsquittierungsnachricht angeordnet sind.

5. Verfahren zur energetischen Optimierung des Betriebs mehrerer Geräte nach einem der Ansprüche 2 bis 4, **dadurch gekennzeichnet, dass** die Daten der Anwendungsebene in Form von einer Variablen oder einer Speicheradresse zur Verfügung gestellt werden, die von der Transportebene verwendet werden und jeweils von der Anwendungsebene zugänglich oder lesbar sind.

## Claims

1. Energy optimization method for the operation of a plurality of devices (1, 2,..10, 11, ..., m) forming at least one interactive group in a network in which the devices (1, 2,..10, 11, ..., m) exchange data in the form of radiofrequency signals, each being able to be transmitter or receiver of such signals, this energy optimization method being based on the management of data measuring the energy levels of the radiofrequency signals received by the devices (1, 2,..10, 11, ..., m) of the group, said data being transmitted by each of said devices (1, 2,..10, 11, ..., m) at each reception of messages sent over the network and analysed by permanent scanning of the signals exchanged over the network, the energy level of the signals being adjusted for each device to correspond to a predetermined optimum energy level for reception of signals by the devices (1, 2,..10, 11, ..., m), **characterized in that**:
- the radiofrequency level data are systematically integrated in all the messages acknowledging reception of the information originating from all the devices (1, 2,..10, 11, ..., m) of the network following the reception of a signal;
- a diagnostic tool (OD) present on the network permanently scans all the signals exchanged over the network and assesses the radiofrequency level data concerning each device (1, 2,..10, 11, ..., m) of the network and contained in all the reception acknowledgement messages;
- the diagnostic tool (OD) compares them to data corresponding to a predetermined energy threshold value and then sends, if necessary, a signal strength modification information item to the address of each transmitting device corresponding to a receiver having sent a message of radiofrequency level differing and/or deviating by a predetermined interval from said threshold value;
- the network is of home automation type.

2. Energy optimization method for the operation of a plurality of devices according to the preceding claim, **characterized in that** the radiofrequency signal level data integrated in the reception acknowledgement messages are conveyed by the upper application layers of the data transmission protocol used in the network, in signals of the transport layer of said protocol.

3. Energy optimization method for the operation of a plurality of devices according to the preceding claim, **characterized in that** said reception acknowledgement messages generated to confirm the correct transmissions of messages sent over the network are of fast ACK type.

4. Energy optimization method for the operation of a plurality of devices according to the preceding claim, **characterized in that** said data are arranged between an identification segment and a check segment of a standard reception acknowledgement message.

5. Energy optimization method for the operation of a plurality of devices according to one of Claims 2 to 4, **characterized in that** said data are made available to the application layer in the form of a variable or of a memory address used by the transport layer and that can respectively be accessed or read by said application layer.
